Europäisches Patentamt

European Patent Office

Office européen des brevets

(11) Publication number: 0 210 050 A2

# EUROPEAN PATENT APPLICATION

(21) Application number: 86305494.6

(22) Date of filing: 16.07.86

(51) Int. Cl.⁴: G 01 L 1/22

(30) Priority: 16.07.85 GB 8517913

(43) Date of publication of application:
28.01.87 Bulletin 87/5

(84) Designated Contracting States:
DE FR GB NL

(71) Applicant: FLOPETROL SERVICES, INC.
8, Aquilino de la Guardia
Panama City(PA)

(72) Inventor: Labbe, Jean Marie Zoning Ind. de Wauthier
Braine
7 Avenue Reine Astrid
B-1430 Braine le Chateau(BE)

(72) Inventor: Jasper, Francis Zoning Ind. de Wauthier Braine
7 Avenue Reine Astrid
B-1430 Braine le Chateau(BE)

(72) Inventor: Bassett, Peter Zoning Ind. de Wauthier Braine
7 Avenue Reine Astrid
B-1430 Braine le Chateau(BE)

(74) Representative: Barrett, James William et al,
A.A. THORNTON & CO. Northumberland House 303-306
High Holborn
London WC1V 7LE(GB)

(54) Semiconductor strain gauges.

(57) The present invention discloses a semiconductor strain gauge (7b) which is formed from a thin layer of semiconductor substrate (1) by means of an insulating layer (6,7a).

The invention also discloses a method of manufacturing such a strain gauge utilising silicon as the semiconductor material. The method employs laser recrystallisation technology to recrystallise a thin layer of polycrystalline silicon (7) formed over an insulating layer (6) on a silicon substrate (1), in order to produce a thin layer of monocrystalline silicon (7b) isolated from the subsrate. This is utilised as a strain gauge.

The advantages of the strain gauges in accordance with the invention include the fact that they can be operated over a wide temperature range, as there is no diode junction formed between the gauge and substrate. They can thus be used in many situations were semiconductor strain gauges have not before been useful.

FIG.10.

Croydon Printing Company Ltd.

- 1 -

## Semiconductor Strain Gauges

The present invention relates to semiconductor strain gauges, particulary but not exclusively to silicon strain gauges, and a method of manufacturing semiconductor strain gauges.

Materials are known which exhibit a piezoresistive effect - the resistance of such materials being variable in proportion to the physical deformation applied to them. Semiconductors exhibit this property, particularly monocrystalline silicon. Strain gauges are manufactured from such materials. The variation of resistance of the gauge is indicative of the amount of strain being applied.

Strain gauges can be used to measure variables such as, for example, pressure, force and acceleration. A typical silicon pressure sensor consists of a silicon membrane into which four strain gauges are formed by local diffusion or implantation of dopants. The strain gauges are connected in a Wheatstone bridge arrangement, the output voltage of which is proportional to the pressure applied to the membrane.

The problem with this arrangement is that because the strain gauges are doped silicon on a silicon membrane diode junctions are created between the doped silicon areas and the non-doped silicon substrate. In order to isolate the strain gauges from the substrate a polarisation voltage must be applied to the membrane to block the diode junction. At high operating temperatures (eg 80°C and above) this method of insulating the strain gauge from the substrate becomes ineffective as the leakage current across the blocked junction increases. The effciency of such strain gauges therefore decreases at high operating temperatures.

There is therefore a need for a semiconductor strain gauge which can operate at high tempereatures. The present invention provides a semiconductor strain gauge (7b) formed on a semiconductor substrate (1) characterised in that the strain gauge (7b) comprises a thin layer of semiconductor material isolated from the semiconductor substrate (1) by an insulating layer (6,7a).

The present invention further provides a method of manufacturing a silicon strain gauge (7b) comprising the steps of;

forming an insulating layer (6) on the surface of a monocrystalline silicon substrate (1);

forming a thin monocrystalline silicon layer (7b) over the insulating layer (6) isolated from the silicon substrate (1).

whereby the thin monocrystalline silicon layer (7b) constitutes a strain gauge.

To form the isolated area of monocrystalline s silicon the present invention preferably includes the further steps of (etc as claim 5 commencing at line 3).

The method of the present invention preferably uses laser recrystallisation technology to recrystallise the layer of polycrystalline silicon the form the area of monocrystalline silicon.

Very thin layers of monocrystalline silicon on an insulating substrate can be produced in this manner. Monocrystals can be formed with typical dimensions of for example, 20 um x 200 um x 0.5 um.

The semiconductor strain gauge of the present invention has the advantage that because it is physically isolated from the substrate no diode junction is formed and therefore there is no need to provide a polarisation voltage. The strain gauge can advantageously be operated over a wide temperature range.

A process employed in accordance with an embodiment of the present invention to manufacture strain gauges on a silicon substrate, when utilising the preferred recrystallisation technique of laser crystallisation, can be summarised generally by the following process steps;

1) An insulating layer is grown on the surface of a silicon wafer;

2) Small windows are opened in this layer;

3) A polycrystalline silicon layer is deposited on the top of the insulating layer.

4) A defined array of antireflecting strips is formed on the polysilicon to induce a particular temperature profile during recrystallisation.

5) The laser recrystallisation is initiated in the windows where polysilicon is in contact with the substrate. The orientation of the substrate is read and copied in the polycrystalline layer;

6) The recrystallisation front moves over the wafer and gives monocrystals between antireflecting strips. Beneath these the temperature profile gives rise to a grain boundary.

7) The windows and the grain boundaries are treated to form insulating areas, giving areas of monocrystalline silicon isolated from the substrate by an insulating spacer. These areas of monocrystalline silicon can be utilised as strain gauges.

Preferably the insulating layers and areas are of silicon dioxide.

Further features and advantages of the present invention will become apparent form the following description of an embodiment thereof by way of example with reference to the accompanying drawings, in which

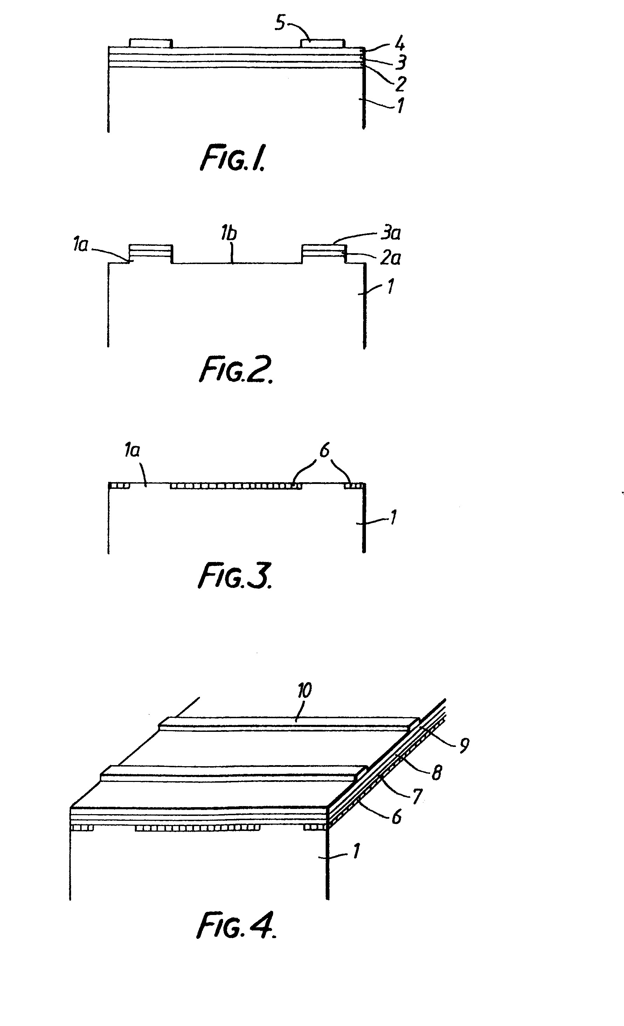

Figures 1 to 10 show a number of views of a semiconductor wafer illustrating stages in the production of a strain gauge in accordance with the present invention, in accordance with the method of the present invention.

Briefly with regard to the figures the stages in the manufacture of a semiconductor strain gauge in accordance with the method of the present invention are as follows:

A layer of insulating material 6 (Figure 3) is formed on the surface of a semiconductor substrate 1. A thin layer 7 of semiconductor material is formed (Figures 4,5 and 6) over the insulating layer 6. Areas 7b (Figure 9) of thin layer semiconductor material are isolated from the substrate 1 by insulative areas 7a and 6. Area 7b can be used as a strain gauge 7c (Figure 10). The strain gauge 7c is completely isolated from the substrate 1.

The following is a detailed description of a method of manufacturing a silicon strain gauge in accordance with the present invention.

Figure 1: Silicon oxide 2 ($SiO_2$), silicon nitride ($Si_3N_4$) and silicon oxide 4 layers respectively are formed by know methods (eg layer deposition) on a monocrystalline silicon substrate 1. Areas 5 of hardened photoresist are formed on the silicon oxide layer 4 by use of a photomask.

Figure 2: The layers 2,3,4 and 5 are etched in accordance with known methods to leave layers 2a and 3a (corresponding in area to area covered by photoresist 5) of silicon oxide and silicon nitride respectively projecting above the silicon substrate 1. The silicon substrate 1 is anisotropically etched so that portions 1a of silicon substrate are formed (corresponding in area to the area covered by photoresist 5) projecting above the top surface 16 of the substrate 1.

Figure 3: A Silicon oxide layer 6 is formed on the top surface of the substrate 1 corresponding to the anisotropically etched areas. Layers 2a and 3a are removed by known etching methods.  A layer of insulating
material 6 is thus formed over the semiconductor substrate
1.  "Windows" in the insulating layer 6 leave areas 1a

of monocrystalline semiconductor substrate exposed.

Figure 4: A thin layer of polycrystalline silicon 7 is formed over the insulating layer 6 and window areas 1a. Layers of silicon nitride 8 and silicon oxide 9 respectively are formed on the layer 7. A photomask is applied to form areas hardened photoresist 10 on the silicon oxide layer 9.

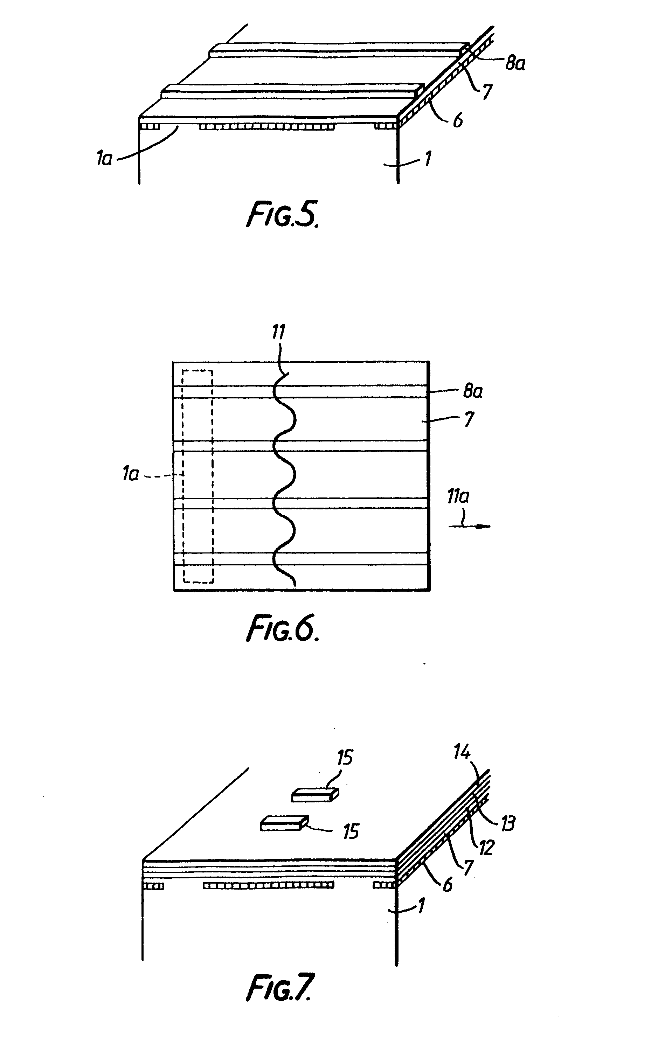

Figure 5: Layers 8.9 and 10 are etched to leave areas of silicon nitride layer 8c corresponding in area to the area covered by photoresist 10. These areas 8a of silicon nitride form a series of antireflecting stripes extending over the surface of the polycrystalline silicon layer 7.

Figure 6: The polycrystalline silicon layer 7 is recrystallised via a process of laser recrystallisation. The laser is passed across the surface of the layer 7 in the direction indicated by arrow 11a. The recrystallisation is initiated in the windows 1a where the polycrystalline silicon layer 7 is in contact with the substrate 1. The orientation of the substrate 1 is read and copied in the polycrystalline layer 7. Line 11 shows the temperature profile of the recrystallisation front which moves across the layer 7. The temperature beneath the antireflecting strips 8a is greater than that between the antireflecting strips. The recrystallisation front moves across the layer 7, monocrystalline silicon being formed in the areas between antireflecting strips 8a. Beneath the antireflecting strips 8a the temperature profile gives rise to grain boundaries.

Laser recrystallisation gives large recrystallised domains.

Layer 8a is etched to leave recrystallised Si over the entire surface.

Figure 7: Layers 12,13 and 14 (SiO₂, Si₃N₄ SiO₂ respectively) are formed on the layer 7. A photomask is applied to form areas of hardened photoresist 15 on the layer 14.

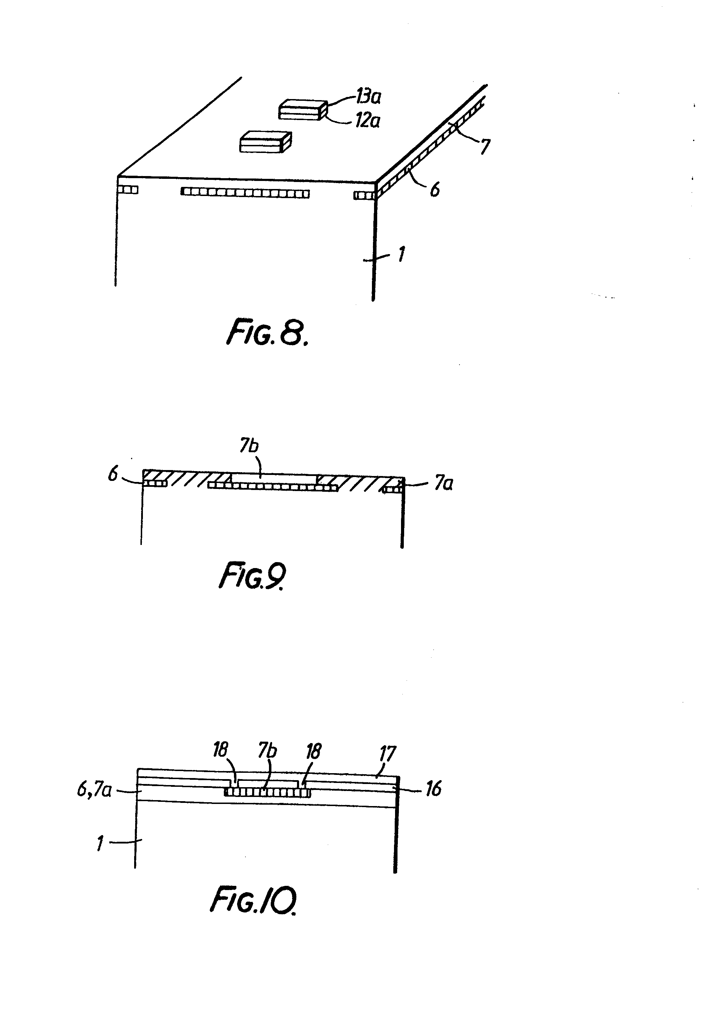

Figure 8: The areas 12, 13, 14 and 15 are etched to leave

12a and 13a (SiO , Si N4 respectively) projecting above the layer 7. The area of layers 12a and 13a correspond to the area covered by photoresist 15. The layers 12a and 13 a are formed to cover areas of monocrystalline silicon on the layer 7.

Figure 9: The exposed areas 7a of the layer 7 are oxidised - leaving isolated areas of monocrystalline silicon 7b beneath the areas covered by the layers 12a and 13a. The layers 13a and 12a are etched. We are left with a thin layer area 7b of monocrystalline silicon completely physically isolated from the silicon substrate 1 by means of the silicon oxide layer 6, 7a. The area 7b may be utilised as a strain gauge.

Figure 10: The area 7b is doped to increase conductivity (with boron for example). A layer of oxide 16 is formed over the surface of the wafer. Holes 18 are formed in the layer 16 to form contact areas for the strain gauge 7b. A conductive layer 17 (aluminium for example) is then formed on the layer 16. contacting the strain gauge 7b via the holes 18. The aluminium layer can be suitably etched and formed to include the strain gauge 7b in a circuit of any choosing.

Because the strain gauge 7b is isolated completely from the substrate 1 it is able to operate in a wide range of tempereature conditions, and it is not necessary to apply a reverse biasing blocking voltage as there is no junction to block.

Strain gauges in accordance with the present invention can be utilised in any number of strain gauge applications. For example, a pressure sensor could be formed from four such strain gauges connected in a Wheatstone bridge arrangement. Such a pressure sensor would be operable over a wide range of tempereatures.

Other application of such strain gauges include accelerometers, force sensors, displacement sensors, knock sensors for example.

Strain gauges in accordance with the present invention can operate over a wide temperature range and may be applied at high temperatures (eg $200^{\circ}c$ and above). They can find particular application in the car industry where they could be used, eg to sense vibration of the engine, which would be a high temperature environment. They can also be usefully applied in many other fields.

It should also be noted that there are other techniques which can be utilised to form thin layers of semiconductor substrate. For example, oxygen implantation, sipox techniques, elelctron beam and U.V., beam recrystallisation techniques could be utilised to form semiconductor strain gauges.

It will be appreciated that the order of some of the process steps which have been described herein may be varied.

CLAIMS

1. A semiconductor strain gauge (7b) formed on a semiconductor substrate (1) characterised in that the strain gauge (7b) comprises a thin layer of semiconductor material isolated from the semiconductor substrate (1) by an insulating layer (6, 7a).

2. A semiconductor strain gauge in accordance with claim 1, wherein the semiconductor material is monocrystalline silicon.

3. A semiconductor strain gauge in accordance with claim 2 wherein the insulating layer (6,7a) is silicon dioxide (SiO2).

4. A method of manufacturing a silicon strain gauge (7b) comprising the steps of;

forming an insulating layer (6) on the surface of a monocrystalline silicon substrate (1):

forming a thin monocrystalline silicon layer (7b) over the insulating layer (6) isolated from the silicon substrate (1),

whereby the thin monocrystalline silicon layer (7b) constitutes a strain gauge.

5. A method in accordance with claim 4, wherein the formation of the thin monocrystalline silicon layer (7b) comprises the further steps of;

forming windows in the insulating layer (6) to expose areas (1a) of monocrystalline silicon substrate (1);

depositing a layer of polycrystalline silicon (7) over the insulating layer (6) and exposed areas (1a);

recrystallising the polycrystalline silicon layer (7) such that the crystal orientation of the exposed areas (1a) is copied whereby a thin layer of monocrystalline silicon (7) is formed, treating the thin monocrystalline silicon layer (7) so as to form insulating areas (7a) which together with the insulating layer (6) isolate a thin monocrystalline silicon layer (7b) from the substrate (1).

6.      A method in accordance with claim 5, wherein the step of recrystallising the polycrystalline silicon layer (7) comprises the further steps of;
    first forming anti-reflecting strips (8a) over the polycrystalline silicon layer (7) whereby to introduce a particular temperature profile (11) during recrystallisation;
    initiating laser recrystallisation in the windows (1a) where the polycrystalline silicon layer (7) is in contact with the exposed areas (1a) of substrate (1), whereby the recrystallisation front moves over the silicon layer (7) giving monocrystals between antireflecting strips (8a), and grain boundaries beneath antireflecting strips.

7.      A method in accordance with claims 5 or 6 wherein the monocrystalline layer (7) is treated by oxidising the grain boundaries and windows to form insulating areas (7a) of silicon dioxide (SiO2) which together with insulating layer 6 isolate the monocrystalline area (7b) from the substrate.

8.      A method in accordance with any of claims 4 to 7 wherein the insulating layer 6 is of silicon dioxide.

9.      A method in accordance with  any of claims 4 to 8 further comprising the step of doping the strain gauge (7b) to increase its conductivity, and adding contacts (15) to the strain gauge (7b) so that it may be utilised in an electrical circuit.

1/3

0210050

FIG.1.

FIG.2.

FIG.3.

FIG.4.

FIG.5.

FIG.6.

FIG.7.

**FIG. 8.**

**FIG. 9.**

**FIG. 10.**